# EUROPEAN PATENT SPECIFICATION

(11) **EP 1 329 307 B1**
(45) Date of publication and mention of the grant of the patent: **11.07.2012**
(21) Application number: 01972614.0
(22) Date of filing: 28.09.2001
(51) Int. Cl.: C03C 17/34, C03C 17/36, B32B 17/10, E06B 3/67

(54) **TRANSPARENT LAMINATE HAVING LOW EMISSIVITY**
DURCHSICHTIGES LAMINAT MIT GERINGEM EMISSIONSVERMÖGEN
STRATIFIE TRANSPARENT A FAIBLE POUVOIR EMISSIF

(30) Priority: 29.09.2000 JP 2000300744
(43) Date of publication of application: 23.07.2003
(73) Proprietor: Nippon Sheet Glass Co., Ltd., Minato-ku Tokyo 108-6321 (JP); Cardinal CG Company, Eden Prairie, Minnesota 55344 (US)
(72) Inventor: MURATA, Kenji c/o Nippon Sheet Glass Co., Ltd., Minato-ku Tokyo 108-6321 (JP); DOSHITA, Kazuhiro c/o Nippon Sheet Glass Co., Ltd., Minato-ku Tokyo 108-6321 (JP); NAKAI, Hidemi c/o Nippon Sheet Glass Co., Ltd., Minato-ku Tokyo 108-6321 (JP)
(74) Representative: Hart-Davis, Jason
(86) International application number: PCT/JP2001/008584
(87) International publication number: WO 2002/026488

(56) References cited:
- EP-A- 0 678 484
- EP-A- 0 698 585
- EP-A1- 1 010 677
- WO-A-97/48649
- FR-A- 2 781 789
- JP-A- 11 034 216
- JP-A- 11 302 038
- JP-A- 59 018 134
- JP-A- 2000 226 235
- US-A- 5 153 054
- US-A- 5 318 685
- US-A- 5 709 930
- US-A- 5 935 702
- US-A- 6 045 896

## Description

### Technical Field

The present invention relates to a transparent layered product with low emissivity coating which is used as multi-layered glass, laminated glass, transparent plate having a function of electromagnetic wave control, planar heating unit, transparent electrode and the like.

### Background of the Invention

As a layered product having low emissivity coating which achieves a function of solar shielding and high thermal insulation, that which is disclosed in Japanese Patent Laid-Open Nos. 30,212/1988, 134,232/1988 or 239,044/1988, etc. has been known.

Such a transparent layered product with low emissivity coating is constituted by forming of a dielectric layer and a metal layer in (2n + 1) layers in total on a transparent substrate followed by forming a protective layer as the upper most layer. It has been also known that ZnO is excellent in a film-forming speed the as the above-mentioned dielectric layer and that Ag is excellent in a function of infra-red reflection as a metal layer.

With regard to a protective layer, SiNₓ, TiO₂ or SiAlOₓN_{y} (sialon) has been known.

In the above-mentioned transparent layered product with low emissivity coating, there has been a problem that the metal layer is corroded by a migration with moisture, oxygen, chlorine and the like in air. Under such circumstances, the present applicant has found that the above-mentioned moisture and the like in air transmits a metal oxide layer (dielectric layer) located over a metal layer and arrives the metal layer, and previously proposed in the Japanese Patent Laid-Open No. 71,441/1997 on the basis of the above finding that, when an average crystallite size of crystalline particles constituting the metal oxide layer is made 20 nm or less, the metal oxide layer can be made dense whereby the above-mentioned corrosion can be prevented and durability of the layered product is improved.

As to the method for making the crystallite size of the metal oxide layer small, there are mentioned three methods in the invention proposed in the above Japanese Patent Laid-Open No.71,441/1997; they are 1) a method where a Zn target is used and pressure of a sputtering gas is made high, 2) a method where a Zn target is used and nitrogen gas is mixed with oxygen gas which is a sputtering gas and 3) a method where an Al-doped ZnO target is used and a sputtering is carried out using Ar gas containing several percents of oxygen. However, there are problem therein such as that, in the above-mentioned 1), pressure in a sputtering apparatus becomes unstable and a film quality becomes non-uniform as a result of making the pressure of the sputtering gas high; in the above-mentioned 2), a sputtering rate becomes unstable and the film quality becomes non-uniform; and, in the above-mentioned 3), the target is expensive. Accordingly, the proposal is not always advantageous for a product in a large size represented by window glass for buildings.

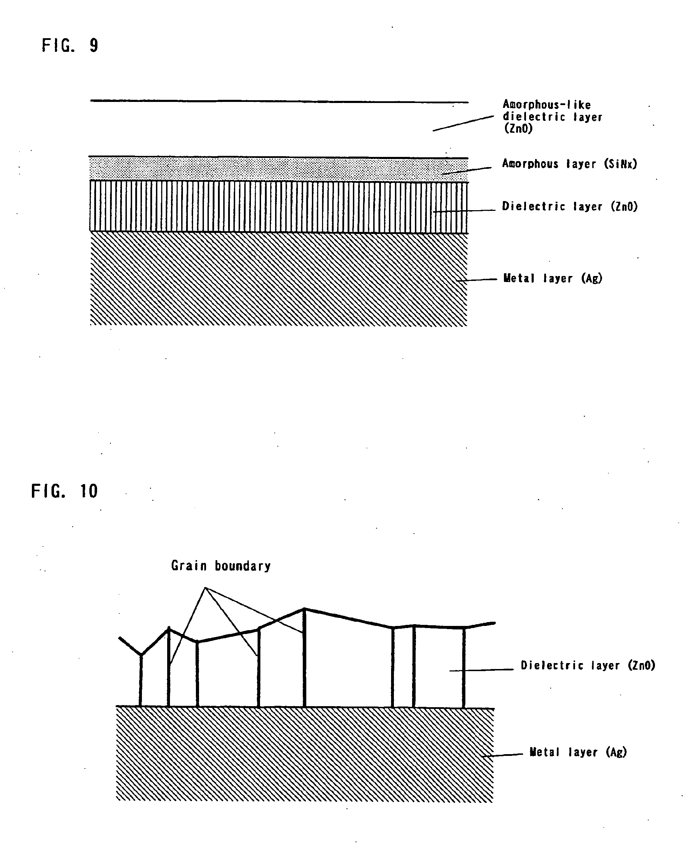

On the other hand however, unless it is carried out to make the crystallite size of the metal oxide layer small, there is formed a film as shown in Fig. 10 where the degree of crystal orientation is high and, in addition, unevenness of the surface is large. When the degree of crystal orientation is high, grain boundary is aligned in a direction of thickness and, via the grain boundary, components which deteriorate the metal layer from outside-to be specific, oxygen, chlorine, sulfur, moisture, etc. - arrive the surface of the metal layer.

When the unevenness of the ZnO layer is large, the unevenness of a film layered thereon is also large and, as a result, the surface unevenness of the transparent layer product with low emissivity becomes large. That has been one of the causes for a low resistance against abrasion. There is another problem that the surface unevenness of the ZnO layer affects the metal layer whereupon the interface of the metal layer also becomes uneven, free energy of the metal surface becomes high and, further, migration is apt to take place easily resulting in corrosion.

As to an invasion route of the component which deteriorates the metal into a film, invasion from the side of substrate will be available in addition to that from the surface of a layered product. In the case of the invasion from the substrate side, arrival of alkaline components such as sodium ion and calcium ion diffused from the substrate at the metal film may be exemplified as well as the above-mentioned components.

Incidentally, although a protective film such as SiNₓ, TiO₂ or SiAlOₓN_{y} (sialon) is amorphous and the grain boundary is not aligned in the direction of thickness, it has been found as a result of experiments that, when the crystal orientation of a dielectric layer formed outside the metal layer is high, suppression of deterioration of metal layer is not sufficient.

US 5,318,685 A shows a layer of silver metal or the like, included as one of a plurality of transparent coating layers upon a glass pane, is protected from staining by providing the pane with a barrier layer comprising the oxides of at least two metals of which one is Me(1) and another is Me(2), wherein Me(1) is titanium, zirconium or hafnium and Me(2) is zinc, tin, indium or bismuth.

According to WO 97/48649, on a substrate, a barrier film of niobium metal or, preferably, a metal oxide may be formed on the other surface (facing the substrate) of each infrared reflective film and silicon nitride may be employed between neighboring infrared reflective films and as an outer protective film.

US 6,045,896 shows a glazing assembly made of at least one transparent substrate having a stack thereon that includes an alternation of n functional layers and n+1 coatings, wherein the functional layers have reflection properties in the infrared and/or solar radiation and wherein n≥1 and wherein at least one of the following must be satisfied: the coating placed on top of at least one of the functional layers includes at least one barrier layer providing a barrier to at least oxygen and water; and at least one absorbent or stabilizing layer made of a material capable of absorbing or stabilizing the constituent material of the functional layer forms a part of either the coating placed on top of the functional layer and under the barrier layer or the coating placed beneath the functional layer; and a method for production of the glazing assembly.

FR 2 781 789 A1 concerns a transparent substrate on a polyvinylbutyral thermoplastic sheet, in which at least one undulated metallic fiber net is inserted for use in plasma screens.

EP 0 698 585 A1 shows a low emissivity film which comprises: a substrate; and a coating of oxide and metallic films alternately formed on the substrate in a total of (2n+1) layers where n is an integer being equal to or more than 1, with an innermost layer thereof being an oxide film, wherein the oxide film (B) formed on the outer side of the metallic film (A) being most apart from the substrate, is a single-layer film or a multi-layer film having at least a film whose major component is hexagonal zinc oxide; and a value of a diffraction angle 2θ (center of gravity position) of (002) diffraction line of the hexagonal zinc oxide of the low emissivity film in X-ray diffraction method using CuKα radiation, is not smaller than 33.88° and not larger than 35.00°.

### Disclosure of the Invention

The invention is defined in the claims.

Durability of a transparent layered product with low emissivity coating or, in other words, deterioration of a metal layer (Ag) is dependent upon the crystal orientation of a dielectric layer and that, in order to put the crystal orientation of the dielectric layer into disorder for making the amorphous-like (a state near amorphous form or an amorphous form), it is effective and simple to install an amorphous layer as a lower layer.

Thus, the transparent layered product with low emissivity coating according to the present invention is made in such a constitution that, in a transparent layered product with low emissivity coating where a dielectric layer and a metal layer are formed alternatingly on a substrate, at least one dielectric layer is divided in a direction of film thickness by at least one amorphous layer.

When, for example, a ZnO layer is formed as a dielectric layer on an amorphous layer, the columnar crystal structure of ZnO is put into disorder giving an amorphous-like form and not only the amorphous layer but also the dielectric layer function as a barrier for preventing the invasion of moisture and gas from outside.

In addition, when the surface unevenness of the ZnO layer becomes small, the result is that the surface of the transparent layered product with low emissivity coatingbecomes smooth and the resistance against abrasion is improved. Further, the interface of the metal layer formed on the ZnO layer where the columnar structure is put into disorder also becomes flat whereupon free energy lowers, migration is suppressed and durability against corrosion is improved as well.

Such a method for dividing a dielectric layer in a direction of film thickness using an amorphous layer can be easily applied under a stable operation of the conventional manufacturing apparatus and is very advantageous for applying to the thing of a large size such as window glass for buildings.

As to the dielectric layer which is divided by the amorphous layer as such, there are exemplified oxide layers containing at least one metal selected from a group consisting of Zn, Sn, Ti, In and Bi and, among them, a layer in which zinc oxide is a main component is advantageous in view of a film formation speed, etc.

As to a dielectric layer which is to be divided by an amorphous layer, a dielectric layer outside the metal layer such as that which is nearest the substrate is used as a standard and a dielectric layer located at the opposite side of the substrate is divided. Since prevention of permeation, etc. of moisture is an object, it is preferred that a dielectric layer outside the metal layer is divided by an amorphous layer.

When there are plural metal layers, there are available a case where the outermost dielectric layer is divided by an amorphous layer, a case where other dielectric layer is divided by an amorphous layer and a case where both of the above are carried out. When the outermost dielectric layer is divided by an amorphous layer, the amorphous layer and the dielectric layer thereon function as a barrier for preventing the invasion of moisture and gas from outside and durability of the layered product is improved. When a dielectric layer other than that is divided by an amorphous layer, the amorphous layer and a dielectric layer thereon protect a metal layer which is located nearer the substrate from moisture and gas from outside. In addition, the amorphous layer suppresses the crystal growth of the dielectric layer thereon and the surface unevenness of the layer formed thereon becomes small resulting in an improvement not only in terms of abrasion resistance and durability but also in terms of smoothness of the metal layer formed on the amorphous layer whereby emissivity of the layered product becomes far lower (in other words, thermal insulating property is further improved) and transmittance of visible light becomes somewhat high. When all of the dielectric layers are divided by amorphous layers, then durability, abrasion resistance and thermal insulating property are further improved due to a synergistic action of such amorphous layers.

When one dielectric layer is divided by plural amorphous layers, crystallization of the dielectric layer is further suppressed and durability, abrasion resistance and thermal insulating property are further improved.

As an above-mentioned amorphous layer, there may be exemplified nitride layer, oxynitride layer, amorphous oxide layer, etc. With regard to the above-mentioned nitride layer, the preferred ones are a nitride containing at least one metal selected from a group consisting of Si, Al, Ti and Sn, an oxynitride containing at least one metal selected from a group consisting of Si, Al, Ti and Sn and an amorphous oxide containing at least one metal selected from a group consisting of Si, Al, Ti and Sn. When a silicon nitride layer is used as the amorphous layer, durability, abrasion resistance and thermal insulating property are improved most significantly and, therefore, silicon nitride is used.

Film thickness of the above-mentioned metal layer is 5 nm to 25 nm or, preferably, 5 nm to 16 nm; film thickness of the above-mentioned dielectric layer is 5 nm to 50 nm and, preferably, 5 nm to 30 nm; and film thickness of the above-mentioned amorphous layer is 3 nm to 30 nm or, preferably, 5 nm to 20 nm.

When the amorphous layer is less than 3 nm, it is insufficient for making the dielectric layer formed thereon be made amorphous while, even when that is made more than 30 nm, no more effect is achieved. Since SiNₓ is selected for an amorphous layer, that is time-consuming for forming a film and, therefore, it is advantageous to make 30 nm or less.

When a protective layer comprising the above-mentioned amorphous layer is further formed on the above-mentioned layered product, there is resulted more improvement in durability and that is preferred. Film thickness of the outermost protective layer comprising an amorphous layer at that time is from 5 nm to 50 nm or, preferably, from 5 nm to 30 nm.

It is also possible that a sacrificial layer comprising metal, metal oxide or the like for preventing the deterioration of a metal layer during the film formation may be inserted in an interface at the distal side from the substrate among the interfaces between the above-mentioned metal layer and metal oxide layer. With regard to the specific examples of the sacrificial layer, there may be used Ti, Zn, Zn/Sn alloy, Nb or an oxide thereof.

As to the metal layer, an Ag film is used and, in addition to that, it is also possible to use Ag which is doped with other metal such as Pd, Au, In, Zn, Sn, Al, Cu or the like. The crystal orientation of the dielectric layer may be quantitatively specified by means of X-ray diffraction. Thus, it may be said that crystal orientation of the dielectrics is sufficiently lost when the integral width βi of the peak having a maximum at 32° ≤ 2θ (angle of diffraction) ≤ 35° is from 0.43 to 1.20 or, preferably, from 0.50 to 1.20 in the X-ray diffraction peaks of the transparent layered product with low emissivity coating using CuKα line.

Incidentally, among the dielectrics, the peak based on a (002) diffraction line of zinc oxide has a maximum at 32° ≤ 2θ (angle of diffraction) ≤ 35°.

### Brief Description of the Drawings

Fig. 1 is a cross-sectional view of a transparent layered product with low emissivity coating according to Example 1;
Fig. 2 is a cross-sectional view of a modified example of Example 1;
Fig. 3 is a cross-sectional view of a transparent layered product with low emissivity coating according to Example 2;
Fig. 4 is a cross-sectional view of a modified example of Example 2;
Fig. 5 is a cross-sectional view of a transparent layered product with low emissivity coating according to Example 3;
Fig. 6 is a cross-sectional view of a modified example of Example 3;
Fig. 7 is a cross-sectional view of a transparent layered product with low emissivity coating according to Example 4;
Fig. 8 is a cross-sectional view of a transparent layered product with low emissivity coating according to Example 5;
Fig. 9 is a schematic view of a dielectric layer divided in a direction of film thickness by an amorphous layer;
Fig. 10 is a schematic view of crystal growth of the conventional dielectric layer (columnar crystal structure);
Fig. 11 is a schematic constitution of a sputtering apparatus used for applying a transparent layered product with low emissivity coating; and
Fig. 12 is an X-ray diffraction graph showing a crystal orientation.

### Best Mode for Carrying Out the Invention

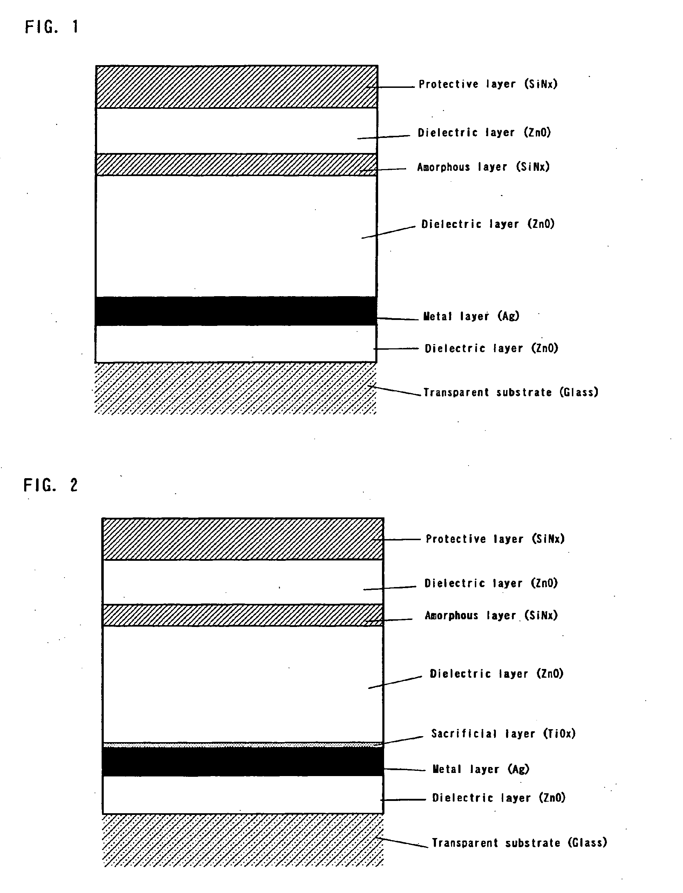

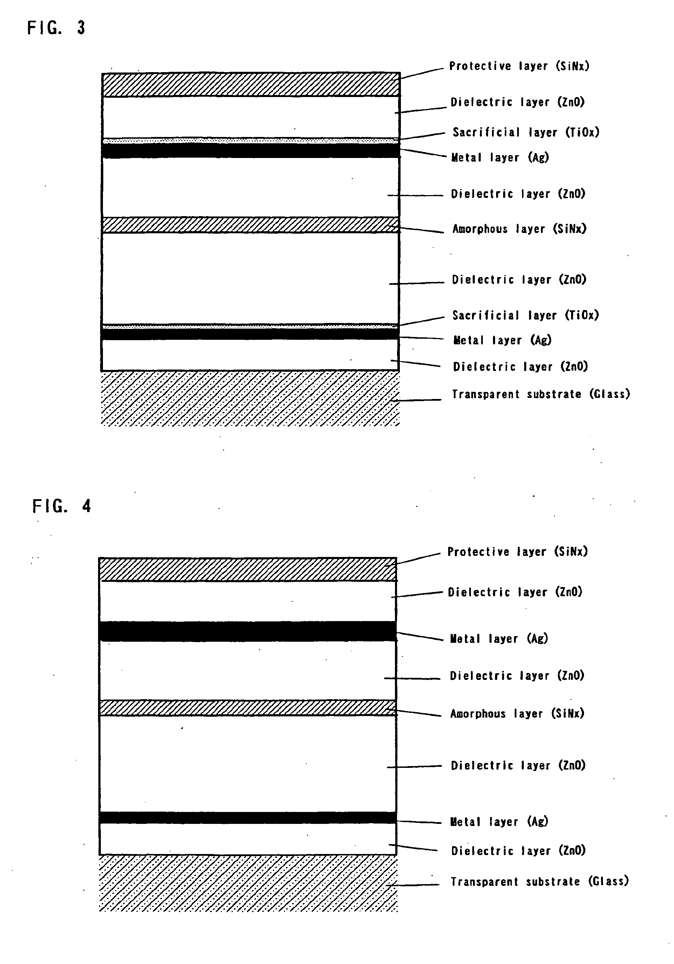

As hereunder, the embodiments of the present invention will be illustrated by referring to examples 2 to 5 and Figs. 3 to 12. Fig. 1 is a cross-sectional view of a transparent layered product with low emissivity coating according to Example 1 while Fig. 2 is a cross-sectional view of a modified example of Example 1. In the transparent layered product with low emissivity coating according to Example 1, a ZnO layer as a dielectric layer having a high crystal orientation is formed on a glass plate as a transparent substrate, an Ag layer is formed as a metal layer on the dielectric layer, a ZnO layer is formed as a dielectric layer having a high crystal orientation on the metal layer, an SiNₓ layer is formed as an amorphous layer on the dielectric layer, a ZnO layer is formed as a dielectric layer for making the crystal orientation low on the amorphous layer and an SiNₓ layer is formed as a protective layer having a protective function on the dielectric layer.

In a modified example of Example 1 as shown in Fig. 2, a sacrificial layer (TiOₓ) is formed on a metal layer (Ag). This sacrificial layer acts particularly effectively when a dielectric layer (ZnO) is formed by means of a reactive sputtering. Thus, when a dielectric layer (ZnO) is formed in a metal layer (Ag) directly, Ag is bonded to oxygen upon sputtering and is apt to be deteriorated. Therefore, Ti is formed on a metal layer (Ag) to bond the said Ti to oxygen upon sputtering giving TiOₓ whereupon the bonding of Ag to oxygen is prevented.

Fig. 3 is a cross-sectional view of the transparent layered product with low emissivity coating according to Example 2 while Fig. 4 is a cross-sectional view of a modified example of Example 2. In the transparent layered product with low emissivity coating according to Example 2, there are two metal layers (Ag) and, on each of the metal layers (Ag), a sacrificial layer (TiOₓ) is formed. A dielectric layer which is installed between a metal layer (Ag) in inner side (a side near the glass) and a metal layer (Ag) in outer side (a distal side from the glass) is made in a two-layered structure, a ZnO layer is formed as a dielectric layer having a high crystal orientation on the metal layer (Ag) of an inner side, an SiNₓ layer is formed as an amorphous layer on the dielectric layer and a ZnO layer is formed on the amorphous layer as a dielectric layer for making the crystal orientation low. In a modified example of Example 2, a sacrificial layer (TiOₓ) is not formed on each of the metal layers (Ag).

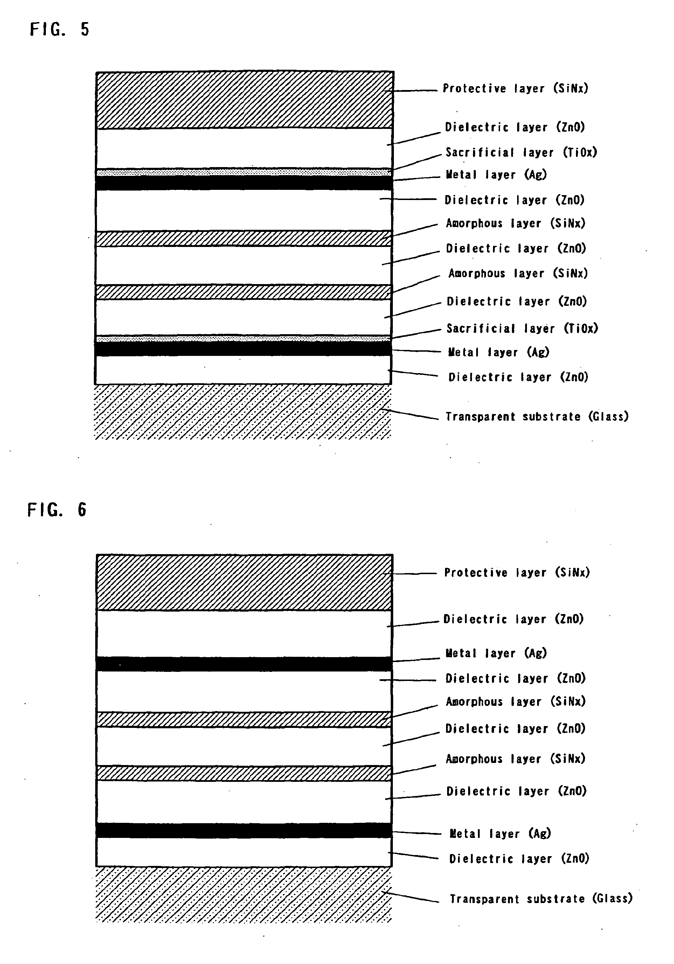

Fig. 5 is a cross-sectional view of a transparent layered product with low emissivity coating according to Example 3 while Fig. 6 is a cross-sectional view of a modified example of Example 3. In Example 3, a sacrificial layer (TiOₓ) is formed on a metal layer (Ag) and, in its modified example, no sacrificial layer (TiOₓ) is formed like Example 2. In the transparent layered product with low emissivity coating according to Example 3, there are two metal layers (Ag) and a dielectrics which is installed between a metal layer (Ag) in inner side (a side near the glass) and a metal layer (Ag) in outer side (a distal side from the glass) is made in a three-layered structure, a ZnO layer is formed as a dielectric layer having a high crystal orientation on the metal layer (Ag) of the inner side, an SiNₓ layer is formed as an amorphous layer on the dielectric layer, a ZnO layer is formed as a dielectric layer for making the crystal orientation low on the amorphous layer, an SiNₓ layer is formed as an amorphous layer thereon and a ZnO layer is formed on the amorphous layer as a dielectric layer for making the crystal orientation low.

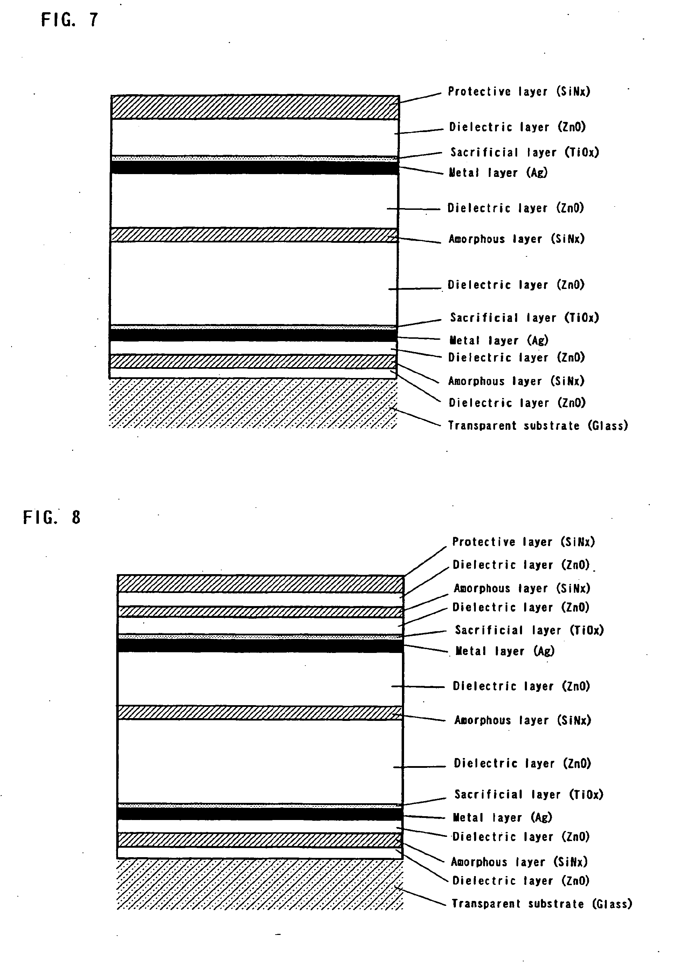

Fig. 7 is a cross-sectional view of a transparent layered product with low emissivity coating according to Example 4. In the transparent layered product with low emissivity according to Example 4, there are two metal layers (Ag) and each of a dielectric layer which is installed between glass and a metal layer (Ag) of an inner side (the side near the glass) and a dielectric layer which is installed between the metal layer (Ag) of inner side and the metal layer (Ag) of outer side is made in a two-layered structure. In each of the dielectrics in a two-layered structure, a ZnO layer is formed as a dielectric layer having a high crystal orientation at the side near the glass, an SiNₓ layer is formed as an amorphous layer on the dielectric layer and a ZnO layer as a dielectric layer for making the crystal orientation low is formed on the amorphous layer.

Fig. 8 is a cross-sectional view of a transparent layered product with low emissivity coating according to Example 5 and, in the transparent layered product with low emissivity coating according to Example 5, there are two metal layers (Ag) and each of a dielectric layer which is installed between glass and the metal layer (Ag) of an inner side, a dielectric layer installed between the metal layer (Ag) of the inner side and the metal layer (Ag) of the outer side and a dielectric layer which is installed outside the metal layer (Ag) of the outer side is made in a two-layered structure. In each of the dielectrics in a two-layered structure, a ZnO layer is formed as a dielectric layer having a high crystal orientation at the side near the glass, an SiNₓ layer is formed as an amorphous layer on the dielectric layer and a ZnO layer is formed as a dielectric layer for making the crystal orientation low on the amorphous layer.

Incidentally, in Examples 2, 3 and 4, the dielectric layer (ZnO) formed outside the metal layer (Ag) on the outer side is not a substance having a low crystal orientation. However, it is possible as well that the dielectric layer (ZnO) formed outside the metal layer (Ag) on the outer side is a substance having a low crystal orientation.

With regard to the dielectric layer (ZnO) formed on an amorphous layer of the above-mentioned Examples 1 to 5, orientation of the crystals is put into disorder as schematically shown in Fig. 9 and the smoothness of the surface is improved. As hereunder, an illustration will be made for specific Examples and Comparative Examples.

### (Example 1)

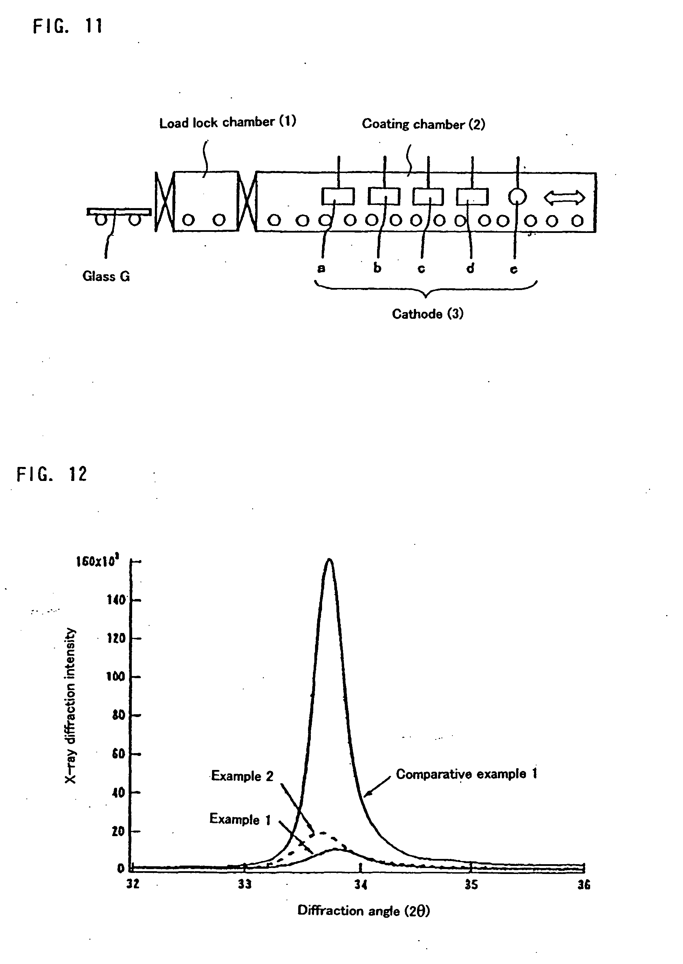

On one of the surfaces of common float glass of 3 mm (thickness) × 2500 mm × 1800 mm, a transparent layered product with low emissivity coating in a structure as shown in Fig. 1, i.e. a sandwiched structure of dielectrics/silver/dielectrics comprising glass/ZnO/Ag/ZnO/SiNₓ/ZnO/SiNₓ was filmed by the so-called magnetron sputtering apparatus of an in-line type of a load lock system having five sets of cathodes as shown in Fig. 11.

The filming was carried out in such a manner that a washed plate glass (G) was conveyed to a load lock chamber (1) from an inlet of a coating apparatus as shown in Fig. 11, exhausted to an extent of a predetermined pressure and conveyed to a coating chamber (2), a sputtering gas was introduced into the coating chamber (2), the pressure was adjusted to a predetermined one being balanced with an exhausting pump, electric power was applied to a cathode (3) to generate electric discharge and a material set at each cathode was sputtered.

In this Example, the glass upon coating was filmed at room temperature without any particular heating. As hereunder, details of the coating will be described.

First, a mixed gas comprising Ar gas containing 2% of oxygen gas was introduced into a chamber to make the pressure 0.40 Pa, direct current (30 kW) was applied to a cathode (3a) set with a sintered zinc oxide target (size: 3,100 mm × 330 mm) to which 2% by mass of alumina were added to cause a sputtering and the glass was shuttled beneath the cathode whereupon a zinc oxide film to which aluminum was added was formed as the first layer.

Then the gas in the chamber was switched to Ar gas to make the pressure 0.45 Pa, direct current (14 kW) was applied to a cathode (3c) set with a silver target (size: 3,100 mm × 330 mm) to cause a sputtering and the glass was passed beneath the cathode whereupon a silver film was formed as the second layer.

After that, a zinc oxide film to which aluminum was added was formed as the third layer by the same method as in the case of the first layer.

Then, the gas in the chamber was switch to N₂ gas to make the pressure 0.45 Pa, direct current (50 kW) was applied to a cathode (3e) set with a silicon target (size: 2, 900 mm × 150 mm diameter) to which 10% by mass of aluminum were added to cause a reactive sputtering and the glass was shuttled beneath the cathode whereupon a silicon nitride film to which aluminum was added was formed as the fourth layer.

After that, a zinc oxide film to which aluminum was added was formed as the fifth layer by the same method as in the case of the first layer and, finally, a silicon nitride film to which aluminum was added was formed as the sixth layer by the same method as in the case of the fourth layer.

The film thickness was adjusted by the speed for passing the glass and the times for the shuttling and the first layer was made 10 nm, the second layer was made 9 nm, the third layer was made 26 nm, the fourth layer was made 5 nm, the fifth layer was made 9 nm and the sixth layer was made 7 nm.

### (Example 2)

A transparent layered product with low emissivity coating in a structure as shown in Fig. 3, i.e. a sandwiched structure of dielectrics/silver/dielectrics/silver/dielectrics comprising glass/ZnO/Ag/TiOₓ/ZnO/SiNₓ/ZnO/Ag/TiOₓ/ZnO/SiNₓ was filmed on one of the surfaces of the same common float glass using the same sputtering apparatus as in Example 1 according to the following manner.

First, oxygen gas was introduced into a chamber to make the pressure 0.40 Pa, direct current (55 kW) was applied to a cathode (3b) set with a zinc target (size: 3,100 mm × 330 mm) to cause a reactive sputtering and the glass was shuttled beneath the cathode whereupon a zinc oxide film was formed as the first layer.

Then the gas in the chamber was switched to Ar gas to make the pressure 0.45 Pa, direct current (8 kW) was applied to a cathode (3c) set with a silver target (size: 3,100 mm × 330 mm) and, at the same time, direct current (8 kW) was applied to a cathode (3d) set with a titanium target (size: 3,100 mm × 330 mm) followed by passing the glass beneath the both cathodes whereupon a silver film and a titanium film were formed as the second and the third layers, respectively.

After that, a zinc oxide film was formed as the fourth layer by the same method as in the case of the first layer. During the formation of the oxide film of this fourth layer, the titanium film of the third layer plays a role of the so-called sacrificial layer, i.e., the said titanium film itself is oxidized whereby deterioration of the silver film is prevented.

Then, the gas in the chamber was switched to N₂ gas to make the pressure 0.45 Pa, direct current (50 kW) was applied to a cathode (3e) set with a silicon target (size: 2,900 mm × 150 mm diameter) to which 10% by mass of aluminum were added to cause a sputtering and the glass was shuttled beneath the cathode whereupon a silicon nitride film to which aluminum was added was formed as the fifth layer.

After that, a zinc oxide film of the sixth layer was formed by the same method as in the case of the first layer; a silver film of the seventh layer and a titanium film of the eighth layer were formed by the same method as in the case of the second and the third layers; a zinc oxide film of the ninth layer was formed by the same method as in the case of the first layer (at that time, the titanium film of the eighth layer was oxidized as a sacrificial layer as same as the third layer) ; and, finally, a silicon nitride film of the tenth layer to which aluminum was added was formed by the same method as in the case of the fifth layer. The film thickness was adjusted by the speed for passing the glass and the times for the shuttling (while electric power was also adjusted for the seventh layer only) and the first layer was made 13 nm, the second layer was made 6 nm, the third layer was made 3 nm, the fourth layer was made 45 nm, the fifth layer was made 6 nm, the sixth layer was made 25 nm, the seventh layer was made 13 nm, the eighth layer was made 3 nm, the ninth layer was made 22 nm and the tenth layer was made 8 nm.

### (Example 3)

A transparent layered product with low emissivity coating in a structure as shown in Fig. 5, i.e. a sandwiched structure of dielectrics/silver/dielectrics/silver/dielectrics comprising glass/ZnO/Ag/TiOₓ/ZnO/SiNₓ/ZnO/SiNₓ/ZnO/Ag/TiOₓ/ZnO/SiNₓ was filmed on one of the surfaces of the same common float glass using the same sputtering apparatus as in Example 1 according to the following manner.

Thus, a zinc oxide film of the first layer, a silver film of the second layer, a titanium film of the third layer (becoming a titanium oxide film after acting as a sacrificial layer), a zinc oxide film of the fourth layer, a silicon nitride film of the fifth layer to which aluminum was added and a zinc oxide film of the sixth layer were formed by the same method as in the case of Example 2.

After that, a silicon nitride film of the seventh layer to which aluminum was added and a zinc oxide layer of the eighth layer were formed by the same method as in the case of the fifth and the sixth layers and then a silver film of the ninth layer, a titanium film of the tenth layer, zinc oxide film of the eleventh layer (at that time, the titanium film of the tenth layer was oxidized as a sacrificial layer as same as above) and a silicon nitride film of the twelfth layer to which aluminum was added were formed by the same method as in the case of the second, the third, the fourth and the fifth layers, respectively.

The film thickness was adjusted by the speed for passing the glass and the times for the shuttling (while electric power was also adjusted for the ninth layer only) and the first layer was made 19 nm, the second layer was made 6 nm, the third layer was made 3 nm, the fourth layer was made 16 nm, the fifth layer was made 13 nm, the sixth layer was made 17 nm, the seventh layer was made 14 nm, the eighth layer was made 18 nm, the ninth layer was made 13 nm, the tenth layer was made 3 nm, the eleventh layer was made 11 nm and the twelfth layer was made 19 nm.

### (Example 4)

A transparent layered product with low emissivity coating in a structure as shown in Fig. 7, i.e. a sandwiched structure of dielectrics/silver/dielectrics/silver/dielectrics comprising glass/ZnO/SiNₓ/ZnO/Ag/TiOₓ/ZnO/SiNₓ/ZnO/Ag/TiOₓ/ZnO/SiNₓ was filmed on one of the surfaces of the same common float glass using the same sputtering apparatus as in Example 1 according to the following manner.

Thus, a zinc oxide film of the first layer, a silicon nitride film of the second layer to which aluminum was added, a zinc oxide film of the third layer, a silver film of the fourth layer, a titanium film of the fifth layer (becoming a titanium oxide layer after acting as a sacrificial layer), a zinc oxide film of the sixth layer, a silicon nitride film of the seventh layer to which aluminum was added and a zinc oxide film of the eighth layer were formed by the same method as in the case of Example 2.

After that, a silver film of the ninth layer, a titanium film of the tenth layer, a zinc oxide film of the eleventh layer (at that time, the titanium film of the tenth layer was oxidized as a sacrificial layer as same as above) and a silicon nitride film of the twelfth layer to which aluminum was added were formed by the same method as in the case of the fourth, the fifth and the sixth layers, respectively.

The film thickness was adjusted by the speed for passing the glass and the times for the shuttling (while electric power was also adjusted for the ninth layer only) and the first layer was made 4 nm, the second layer was made 5 nm, the third layer was made 4 nm, the fourth layer was made 6 nm, the fifth layer was made 3 nm, the sixth layer was made 45 nm, the seventh layer was made 6 nm, the eighth layer was made 25 nm, the ninth layer was made 13 nm, the tenth layer was made 3 nm, the eleventh layer was made 22 nm and the twelfth layer was made 8 nm.

### (Example 5)

A transparent layered product with low emissivity coating in a structure as shown in Fig. 7, i.e. a sandwiched structure of dielectrics/silver/dielectrics/silver/dielectrics comprising glass/ZnO/SiNₓ/ZnO/Ag/TiOₓ/ZnO/SiNₓ/ZnO/Ag/TiOₓ/ZnO/SiNₓ/ZnO/SiNₓ was filmed on one of the surfaces of the same common float glass using the same sputtering apparatus as in Example 1 according to the following manner.

Thus, a zinc oxide film of the first layer, a silicon nitride film of the second layer to which aluminum was added, a zinc oxide film of the third layer, a silver film of the fourth layer, a titanium film of the fifth layer (becoming a titanium oxide layer after acting as a sacrificial layer), a zinc oxide film of the sixth layer, a silicon nitride film of the seventh layer to which aluminum was added and a zinc oxide film of the eighth layer were formed by the same method as in the case of Example 2.

After that, a silver film of the ninth layer, a titanium film of the tenth layer, a zinc oxide film of the eleventh layer (at that time, the titanium film of the tenth layer was oxidized as a sacrificial layer as same as above), a silicon nitride film of the twelfth layer to which aluminum was added, a zinc oxide film of the thirteenth layer and a silicon nitride film of the fourteenth layer to which aluminum was added were formed by the same method as in the case of the fourth, the fifth, the sixth, the seventh and the eighth layers, respectively.

The film thickness was adjusted by the speed for passing the glass and the times for the shuttling (while electric power was also adjusted for the ninth layer only) and the first layer was made 4 nm, the second layer was made 5 nm, the third layer was made 4 nm, the fourth layer was made 6 nm, the fifth layer was made 3 nm, the sixth layer was made 45 nm, the seventh layer was made 6 nm, the eighth layer was made 25 nm, the ninth layer was made 13 nm, the tenth layer was made 3 nm, the eleventh layer was made 10 nm, the twelfth layer was made 5 nm, the thirteenth layer was made 7 nm and the fourteenth layer was made 8 nm.

### (Comparative Example 1)

A transparent layered product with low emissivity coating in a sandwiched structure of dielectrics/silver/dielectrics/silver/dielectrics comprising glass/ZnO/Ag/TiOₓ/ZnO/Ag/TiOₓ/ZnO/SiNₓ was filmed on one of the surfaces of the same common float glass using the same sputtering apparatus as in Example 1 according to the following manner.

Thus, a zinc oxide film of the first layer, a silver film of the second layer, a titanium film of the third layer (becoming a titanium oxide film after acting as a sacrificial layer) and a zinc oxide film of the fourth layer were formed by the same method as in the case of Example 2.

After that, a silver film of the fifth layer, a titanium film of the sixth layer and a zinc oxide film of the seventh layer (at that time, the titanium film of the sixth layer was oxidized as a sacrificial layer as same as above) were formed by the same method as in the case of the second, the third and the fourth layers. Finally, a silicon nitride film of the eighth layer to which aluminum was added was formed by the same method as in the case of the tenth layer in Example 2.

The film thickness was adjusted by the speed for passing the glass and the times for the shuttling (while electric power was also adjusted for the fifth layer only) and the first layer was made 16 nm, the second layer was made 6 nm, the third layer was made 3 nm, the fourth layer was made 74 nm, the fifth layer was made 13 nm, the sixth layer was made 3 nm, the seventh layer was made 19 nm and the eighth layer was made 9 nm.

### (Evaluation of Characteristics)

In the layered products prepared as such, their emissivity coating was 0.090 for Example 1, 0.035 for Example 2, 0.030 for Example 3, 0.028 for Example 4, 0.026 for Example 5 and 0.040 for Comparative Example 1 while their transmissivity to visible light was 83.0% for Example 1, 78.1% for Example 2, 78.4% for Example 3, 78.6% for Example 4, 78.7% for Example 5 and 77.5% for Comparative Example 1 and each of the products had ideal characteristics as a transparent layered product with low emissivity coating.

With regard to an integral width βi, it was 0.58 for Example 1, 0.56 for Example 2, 0.98 for Example 3, 0.63 for Example 4 and 0.68 for Example 5 while, for Comparative Example 1, it was 0.28.

As hereunder, there is given a Table in which evaluation of characteristics of the products of Examples 1, 2, 3, 4 and 5 and Comparative Example 1 is summarized.

**Table**

| | | Ex. 1 | Ex. 2 | Ex. 3 | Ex. 4 | Ex. 5 | Comp. Ex. 1 |
|---|---|---|---|---|---|---|---|
| Film Constitution and Film Thickness (nm) | SiNₓ | 7 | 8 | 19 | 8 | 8 | 9 |
| | ZnO | | | | | 7 | |
| | SiNₓ | | | | | 5 | |
| | ZnO | | 22 | 11 | 22 | 10 | 19 |
| | TiOₓ | | 3 | 3 | 3 | 3 | 3 |
| | Ag | | 13 | 13 | 13 | 13 | 13 |
| | ZnO | | | 18 | | | |
| | SiNₓ | | | 14 | | | |
| | ZnO | 9 | 25 | 17 | 25 | 25 | |
| | SiNₓ | 5 | 6 | 13 | 6 | 6 | |
| | ZnO | 26 | 45 | 16 | 45 | 45 | 74 |
| | TiOₓ | | 3 | 3 | 3 | 3 | 3 |
| | Ag | 9 | 6 | 6 | 6 | 6 | 6 |
| | ZnO | | | | 4 | 4 | |
| | SiNₓ | | | | 5 | 5 | |
| | ZnO | 10 | 13 | 19 | 4 | 4 | 16 |
| | Glass | FL3 | FL3 | FL3 | FL3 | FL3 | FL3 |
| Corresponding Drawings in the Specification | | Fig.1 | Fig.3 | Fig.5 | Fig.7 | Fig.8 | |
| Characteristics | Emissivity | 0.090 | 0.035 | 0.030 | 0.028 | 0.026 | 0.040 |
| | Visible Light Transmissivity(%) | 83.0 | 78.1 | 78.4 | 78.6 | 78.7 | 77.5 |
| | βi | 0.58 | 0.56 | 0.98 | 0.63 | 0.68 | 0.28 |
| | Salt water Dipping Test | 0 | 0 | 0 | 0 | 0 | × |
| | Peel Fracture Load (mN) | | 26 | | | | 13 |

When an XRD analysis of the coating was carried out by a θ-2θ method using a CuKα line, there appeared peaks of 2θ within a range of from 32° to 35° which were all thought to be due to a (002) diffraction line of zinc oxide. The said data are exemplified in Fig. 12 for Examples 1 and 2 and Comparative Example 1. The diffraction data were subjected to a correction for expansion of peak from a peak position in a standard sample and separation of Kα1 and Kα2 and then an integral width (βi) was calculated whereupon it was found to be 0.58 for Example 1, 0.56 for Example 2, 0.98 for Example 3 and 0.28 for Comparative Example 1.

In order to check a chemical resistance of the coating, a salt water dipping test (3 weight % solution of NaCl; 20°C) was carried out whereupon, even when dipped for 3 hours, no change was noted at all for the coatings of Examples 1, 2 and 3 while, in the coating of Comparative Example 1, there was noted a pinhole-like luminescent spot by reflection under strong light.

In order to check the resistance to scratch of the coating, a scratch test was carried out by a scratch tester CSR-02 manufactured by Rhesca Company Limited using a diamond compressing element having a frontal diameter of 5 µm whereupon the load for initiating the peel fracture of the coating was 26 mN for Example 2 while it was 13 mN for Comparative Example 1.

### (Comparative Example 2)

A transparent layered product with low emissivity coating in a sandwiched structure of dielectrics/silver/dielectrics/silver/dielectrics comprising glass/ZnO/Ag/TiOₓ/ZnO/Ag/TiOₓ/ZnO/SiNₓ was filmed on one of the surfaces of the same common float glass using the same sputtering apparatus as in Comparative Example 1 according to the following manner.

Thus, a zinc oxide film of the first layer, a silver film of the second layer, a titanium film of the third layer (becoming a titanium oxide film after acting as a sacrificial layer), a zinc oxide film of the fourth layer, a silver film of the fifth layer, a titanium film of the sixth layer, a zinc oxide film of the seventh layer (at that time, the titanium film of the sixth layer was oxidized as a sacrificial layer as same as above) and a silicon nitride film of the eighth layer to which aluminum was added were formed by the same method as in the case of Comparative Example 1. Incidentally, in order to make an average crystallite size small, the zinc oxide films of the first, the fourth and the seventh layers were formed by a reactive sputtering using a 1:1 mixed gas of nitrogen and oxygen with a gas pressure of 0.40 Pa.

Non-uniform color was resulted in reflected color and transmitted color in the layered product prepared as such whereby there is a problem in terms of uniformity.

### (Comparative Example 3)

A transparent layered product with low emissivity coating in a sandwiched structure of dielectrics/silver/dielectrics/silver/dielectrics comprising glass/ZnO/Ag/TiOₓ/ZnO/Ag/TiOₓ/ZnO/SiNₓ was filmed on one of the surfaces of the same common float glass using the same sputtering apparatus as in Comparative Example 1 according to the following manner.

Thus, a zinc oxide film of the first layer, a silver film of the second layer, a titanium film of the third layer (becoming a titanium oxide film after acting as a sacrificial layer), a zinc oxide film of the fourth layer, a silver film of the fifth layer, a titanium film of the sixth layer, a zinc oxide film of the seventh layer (at that time, the titanium film of the sixth layer was oxidized as a sacrificial layer as same as above) and a silicon nitride film of the eighth layer to which aluminum was added were formed by the same method as in the case of Comparative Example 1. Incidentally, in order to make an average crystallite size small, the zinc oxide films of the first, the fourth and the seventh layers were attempted to form by a reactive sputtering where pressure of oxygen was raised to 1.0 Pa. However, due to movement of the glass, conductance in a vacuum chamber changed and the gas pressure became unstable.

Non-uniform color was resulted in reflected color and transmitted color in the layered product prepared as such whereby there is a problem in terms of uniformity.

As fully illustrated hereinabove, there is formed such a constitution according to the present invention that, in a transparent layered product with lowemissivity coating where a dielectric layer and a metal layer are formed alternatingly on a substrate, at least one dielectric layer is divided in a direction of film thickness by at least one amorphous layer and, therefore, it is now possible that crystal orientation of the dielectric layer formed on the amorphous layer is lowered, components invaded into the metal layer from outside via the grain boundary of dielectrics are reduced, deterioration of the metal layer is effectively suppressed and durability is enhanced. In addition, unevenness on the surface of the dielectric layer becomes small and, therefore, the surface unevenness of the layer formed thereupon also becomes small and resistance to abrasion is improved. Moreover, migration is suppressed as a result of reduction in unevenness of the metal layer whereby durability to corrosion is improved as well. Further, there is resulted an advantage that, because of less unevenness of the metal layer, emissivity of the layered product becomes far lower or, in other words, thermal insulating property is improved and transmissivity of visible light becomes high.

### Industrial Applicability

Among the transparent layered products having solar shielding property and high thermal insulating property, those which have particularly excellent durability of a metal layer (Ag) can be provided by the present invention and they are effective as insulating double glazing unit, laminated glass, transparent plate having a function of electromagnetic wave control, planar heating unit, transparent electrode and the like.

## Claims

1. A transparent layered product with low emissivity coating where a dielectric layer and a metal layer are formed alternately on a substrate, **characterized in that** at least one dielectric layer is divided in a direction of film thickness by at least one amorphous layer, and said metal layer is two or more layers and when a metal layer being farthest from the substrate is taken as a reference position, at least one of the dielectric layers divided by said amorphous layer is located on the same side as the substrate side, and the film thickness of said amorphous layer is 3 nm to 30 nm, and at least one of said amorphous layers comprises a silicon nitride layer, and said metal layer mainly comprises Ag.

2. A transparent layered product with low emissivity coating according to claim 1, the transparent layered product with low emissivity coating which is **characterized in that** the dielectric layer divided by the above-mentioned amorphous layer is an oxide layer containing at least one metal selected from a group consisting of Zn, Sn, Ti, In and Bi.

3. A transparent layered product with low emissivity coating according to claim 2, the transparent layered product with low emissivity coating which is **characterized in that** the dielectric layer divided by the above-mentioned amorphous layer is a layer which mainly comprises zinc oxide.

4. A transparent layered product with low emissivity coating according to any of claims 1 to 3, the transparent layered product with low emissivity coating which is **characterized in that** at least one layer of the dielectric layers divided by the above-mentioned amorphous layer is located at the opposite side of a substrate when a metal layer being nearest the substrate is taken as a standard.

5. A transparent layered product with low emissivity coating according to any of claims 1 to 4, the transparent layered product with low emissivity coating which is **characterized in that** the outermost layer of the transparent layered product with low emissivity coating is a protective layer comprising a nitride, an oxynitride or an amorphous oxide containing at least one metal selected from a group consisting of Si, Al, Ti and Sn.

6. A transparent layered product with low emissivity coating according to any of claims 1 to 5, the transparent layered product with low emissivity coating which is **characterized in that** the film thickness of the above-mentioned amorphous layer is from 5 nm to 20 nm.

7. A transparent layered product with low emissivity coating according to claims 1 to 6, the transparent layered product with low emissivity coating which is **characterized in that** all of the above-mentioned dielectric layers are the layers mainly comprising zinc oxide.

8. A transparent layered product with low emissivity coating according to any of claims 1 to 7, the transparent layered product with low emissivity coating which is **characterized in that** a sacrificial layer for preventing the deterioration of a metal layer during the film formation is inserted into an interface which is distal from a substrate among the interfaces between the above-mentioned metal layer and metal oxide layer.

9. A transparent layered product with low emissivity coating according to any of claims 1 to 8, the transparent layered product with low emissivity coating which is **characterized in that** an integral width β of a peak having a maximum at 32° ≤ 28; (angle of diffraction) ≤ 35° in X-ray diffraction peaks using CuKα line of the above-mentioned transparent layered product of low emissivity is from 0.43 to 1.20.

10. A transparent layered product with low emissivity coating according to claim 9, the transparent layered product with low emissivity coating which is **characterized in that** the above-mentioned integral width β i is from 0.50 to 1.20.

11. A transparent layered product with low emissivity coating according to any of claim 9 or claim 10, the transparent layered product with low emissivity coating which is **characterized in that** the above-mentioned peak having a maximum at 32° ≤ 2θ (angle of diffraction) ≤ 35° is a peak depending upon a (002) diffraction line of zinc oxide.

## Patentansprüche

1. Transparentes Schichtprodukt mit niedrigemissiver Beschichtung, wobei eine dielektrische Schicht und eine Metallschicht abwechselnd auf einem Substrat ausgebildet sind, **dadurch gekennzeichnet, daß** wenigstens eine dielektrische Schicht in einer Richtung der Filmdicke durch wenigstens eine amorphe Schicht geteilt ist und daß die Metallschicht aus zwei oder mehr Schichten besteht und, wenn eine Metallschicht, die am weitesten von dem Substrat entfernt ist, als eine Bezugsposition genommen wird, wenigstens eine der dielektrischen Schichten, die durch die amorphe Schicht geteilt sind, auf derselben Seite wie die Substratseite angeordnet ist und die Filmdicke der amorphen Schicht 3 nm bis 30 nm beträgt und wenigstens eine der amorphen Schichten eine Siliziumnitridschicht umfaßt und die Metallschicht vorwiegend Ag umfaßt.

2. Transparentes Schichtprodukt mit niedrigemissiver Beschichtung nach Anspruch 1, wobei das transparente Schichtprodukt mit niedrigemissiver Beschichtung **dadurch gekennzeichnet ist, daß** die dielektrische Schicht, die durch die oben genannte amorphe Schicht geteilt ist, eine Oxidschicht ist, die wenigstens ein Metall enthält, das aus der Gruppe gewählt ist, die aus Zn, Sn, Ti, In und Bi besteht.

3. Transparentes Schichtprodukt mit niedrigemissiver Beschichtung nach Anspruch 2, wobei das transparente Schichtprodukt mit niedrigemissiver Beschichtung **dadurch gekennzeichnet ist, daß** die dielektrische Schicht, die durch die oben genannte amorphe Schicht geteilt ist, eine Schicht ist, die vorwiegend Zinkoxid umfaßt.

4. Transparentes Schichtprodukt mit niedrigemissiver Beschichtung nach einem der Ansprüche 1 bis 3, wobei das transparente Schichtprodukt mit niedrigemissiver Beschichtung **dadurch gekennzeichnet ist, daß** wenigstens eine Schicht der dielektrischen Schichten, die durch die oben genannte amorphe Schicht geteilt sind, auf der gegenüberliegenden Seite des Substrats angeordnet ist, wenn eine Metallschicht, welche dem Substrat am nächsten ist, als Standard genommen wird.

5. Transparentes Schichtprodukt mit niedrigemissiver Beschichtung nach einem der Ansprüche 1 bis 4, wobei das transparente Schichtprodukt mit niedrigemissiver Beschichtung **dadurch gekennzeichnet ist, daß** die äußerste Schicht des transparenten Schichtprodukts mit niedrigemissiver Beschichtung eine Schutzschicht ist, welche ein Nitrid, ein Oxynitrid oder ein amorphes Oxid umfaßt, das wenigstens ein Metall enthält, das aus der Gruppe gewählt ist, die aus Si, Al, Ti und Sn besteht.

6. Transparentes Schichtprodukt mit niedrigemissiver Beschichtung nach einem der Ansprüche 1 bis 5, wobei das transparente Schichtprodukt mit niedrigemissiver Beschichtung **dadurch gekennzeichnet ist, daß** die Filmdicke der oben genannten amorphen Schicht 5 nm bis 20 nm beträgt.

7. Transparentes Schichtprodukt mit niedrigemissiver Beschichtung nach Anspruch 1 bis 6, wobei das transparente Schichtprodukt mit niedrigemissiver Beschichtung **dadurch gekennzeichnet ist, daß** alle oben genannten dielektrischen Schichten die Schichten sind, die vorwiegend Zinkoxid umfassen.

8. Transparentes Schichtprodukt mit niedrigemissiver Beschichtung nach einem der Ansprüche 1 bis 7, wobei das transparente Schichtprodukt mit niedrigemissiver Beschichtung **dadurch gekennzeichnet ist, daß** eine Opferschicht zur Verhinderung der Schädigung einer Metallschicht bei der Filmbildung an einer Grenzfläche eingefügt ist, welche unter den Grenzflächen zwischen der oben genannten Metallschicht und Metalloxidschicht distal von einem Substrat ist.

9. Transparentes Schichtprodukt mit niedrigemissiver Beschichtung nach einem der Ansprüche 1 bis 8, wobei das transparente Schichtprodukt mit niedrigemissiver Beschichtung **dadurch gekennzeichnet ist, daß** eine integrale Peakbreite β mit einem Maximum bei 32° ≤ 2θ (Diffraktionswinkel) ≤ 35° bei Röntgendiffraktionspeaks unter Verwendung der CuKα-Linie des oben genannten transparenten Schichtprodukts mit niedrigem Emissionsvermögen von 0,43 - 1,20 ist.

10. Transparentes Schichtprodukt mit niedrigemissiver Beschichtung nach Anspruch 9, wobei das transparente Schichtprodukt mit niedrigemissiver Beschichtung **dadurch gekennzeichnet ist, daß** die oben genannte Integralbreite β von 0,50 bis 1,20 ist.

11. Transparentes Schichtprodukt mit niedrigemissiver Beschichtung nach Anspruch 9 oder Anspruch 10, wobei das transparente Schichtprodukt mit niedrigemissiver Beschichtung **dadurch gekennzeichnet ist, daß** der oben genannte Peak mit einem Maximum bei 32° ≤ 2θ (Diffraktionswinke)) ≤ 35° ein Peak ist, der von einer (002) Diffraktionslinie von Zinkoxid abhängt.

## Revendications

1. Produit stratifié transparent à revêtement à faible émissivité où une couche diélectrique et une couche métallique sont formées tour à tour sur un substrat, **caractérisé en ce qu'**au moins une couche diélectrique est divisée dans une direction de l'épaisseur de film par au moins une couche amorphe, et ladite couche métallique est deux ou plusieurs couches et quand une couche métallique qui est la plus éloignée du substrat est prise comme position de référence, au moins l'une des couches diélectriques divisées par ladite couche amorphe est située sur le même côté que le côté du substrat, et l'épaisseur de film de ladite couche amorphe est 3 nm à 30 nm, et au moins l'une desdites couches amorphes comprend une couche de nitrure de silicium, et ladite couche métallique comprend principalement Ag.

2. Produit stratifié transparent à revêtement à faible émissivité selon la revendication 1, le produit stratifié transparent à revêtement à faible émissivité qui est **caractérisé en ce que** la couche diélectrique divisée par la couche amorphe mentionnée ci-dessus est une couche d'oxyde contenant au moins un métal choisi dans un groupe consistant en Zn, Sn, Ti, In et Bi.

3. Produit stratifié transparent à revêtement à faible émissivité selon la revendication 2, le produit stratifié transparent à revêtement à faible émissivité qui est **caractérisé en ce que** la couche diélectrique divisée par la couche amorphe mentionnée ci-dessus est une couche qui comprend principalement de l'oxyde de zinc.

4. Produit stratifié transparent à revêtement à faible émissivité selon l'une quelconque des revendications 1 à 3, le produit stratifié transparent à revêtement à faible émissivité qui est **caractérisé en ce qu'**au moins une couche des couches diélectriques divisées par la couche amorphe mentionnée ci-dessus est situé du côté opposé d'un substrat quand une couche métallique qui est la plus proche du substrat est prise comme standard.

5. Produit stratifié transparent à revêtement à faible émissivité selon l'une quelconque des revendications 1 à 4, le produit stratifié transparent à revêtement à faible émissivité qui est **caractérisé en ce que** la couche la plus externe du produit stratifié transparent à revêtement à faible émissivité est une couche protectrice comprenant un nitrure, un oxynitrure ou un oxyde amorphe contenant au moins un métal choisi dans un groupe consistant en Si, Al, Ti et Sn.

6. Produit stratifié transparent à revêtement à faible émissivité selon l'une quelconque des revendications 1 à 5, le produit stratifié transparent à revêtement à faible émissivité qui est **caractérisé en ce que** l'épaisseur de film de la couche amorphe mentionnée ci-dessus est de 5 nm à 20 nm.

7. Produit stratifié transparent à revêtement à faible émissivité selon l'une quelconque des revendications 1 à 6, le produit stratifié transparent à revêtement à faible émissivité qui est **caractérisé en ce que** toutes les couches diélectriques mentionnées ci-dessus sont les couches comprenant principalement de l'oxyde de zinc.

8. Produit stratifié transparent à revêtement à faible émissivité selon l'une quelconque des revendications 1 à 7, le produit stratifié transparent à revêtement à faible émissivité qui est **caractérisé en ce qu'**une couche sacrificielle pour empêcher la détérioration d'une couche métallique pendant la formation de film est insérée dans une interface qui est distale par rapport à un substrat parmi les interfaces entre la couche métallique et la couche d'oxyde métallique mentionnées ci-dessus.

9. Produit stratifié transparent à revêtement à faible émissivité selon l'une quelconque des revendications 1 à 8, le produit stratifié transparent à revêtement à faible émissivité qui est **caractérisé en ce qu'**une largeur intégrale β d'un pic ayant un maximum à 32° ≤ 2θ ; (angle de diffraction) ≤ 35° dans les pics de diffraction de rayons X avec la raie CuKα du produit stratifié transparent à faible émissivité mentionné ci-dessus est de 0,43 à 1,20.

10. Produit stratifié transparent à revêtement à faible émissivité selon la revendication 9, le produit stratifié transparent à revêtement à faible émissivité qui est **caractérisé en ce que** la largeur intégrale β mentionnée ci-dessus est de 0,50 à 1,20.

11. Produit stratifié transparent à revêtement à faible émissivité selon l'une quelconque de la revendication 9 ou de la revendication 10, le produit stratifié transparent à revêtement à faible émissivité qui est **caractérisé en ce que** le pic mentionné ci-dessus ayant un maximum à 32° ≤ 2θ (angle de diffraction) ≤ 35° est un pic dépendant d'une raie de diffraction (002) d'oxyde de zinc.
